# EUROPEAN PATENT APPLICATION

(11) **EP 1 435 697 A1**
(43) Date of publication of application: **07.07.2004**
(21) Application number: 02029074.8
(22) Date of filing: 30.12.2002
(51) Int. Cl.: H04B 1/10

(54) **Wave detector**

(71) Applicant: Lin, Rich, Yung-Ho City, Taipei Hsien (TW)
(72) Inventor: Lin, Rich, Yung-Ho City, Taipei Hsien (TW)
(74) Representative: Zeitler, Giselher, Dipl.-Ing.

(57) **Abstract**

The present invention is a structure of a wave detection filter for wired and wireless platforms. It comprises an antenna, a transmission signal, a signal output, a wave detection module, and a first connector, a second connector and a third connector. The wave detection module comprises an integrated circuit with at least three connectors, which are electrically connected to the corresponding connectors in the structure. By the wave detection and filtering functions of the wave detection module, the EM wave is eliminated, and the quality of the transmission signal is improved.

## Description

### FIELD OF THE INVENTION

This invention relates to a structure of an EM wave detector, and more particular, to a structure of an EM wave detector to be used in wired and wireless platforms for improving the signal transmission quality and eliminating EM waves.

### BACKGROUND OF THE INVENTION

The major function of an antenna is to induce reactive electrical current to the signals, and radiate (i.e., transmit) the signals through the atmosphere. The strength of the signals relies on the induced electrical current, which, in turns, depends on the output (input) power of the transmitter (receiver), that is, the wattage at the antenna of cellular phones or at the base station. However, the movement of the antenna in the atmosphere causes air friction, and generates static electricity. When the static electricity accumulates on the surface of antenna, the noise is formed and will cause further interference once the noise is amplified by the transceiver. The basic working theory for antenna is to act as a media for energy transmission, and the atmosphere as the amplifier, which transforms the RF into electrical signals, then into voice signals, similar to that of high frequency transformers. The contemporary designs of wireless base station and antenna of cellular phones are all based on the energy transmission theory, and compatible with all kinds of wireless communication devices. On the other hand, the aforementioned situation does not exist in vacuum. The size of the antenna and its operational frequency is not within the scope of the present discussion. The antenna provides a good path for EM wave transmission, the RF transmission and discharge unrelated to grounding require even more consideration.

The filter of the present invention uses wave envelop detection, and focuses on recovering original base frequency. In other words, upon receiving carrier, it detects real signal and filters out non-signals. This is called a high pass filter, which filters out the direct current. The time constant plays an important role in such a device. It not only filters out direct current, but also discharges slow enough so that the signal will not be over-reduced at its peak value. On the other hand, when the discharge is too slow, the signals will be distorted. When the time constant is too small, it is hard to detect the base frequency of the real signal. This is where the wave envelop detection works. According to the high frequency transformer theory, the higher the power, the shorter the transmission distance is. In microwave communication, when the frequency is higher, its energy is lower, hence, the longer the transmission distance and lower penetration capability. The lower frequency part, amplified with the signals, seeks for a discharge path. The object that is closer to the cellular phone is a good candidate for the discharge path. The discharge, with its penetration capability, form what is called as the EM wave. The wave envelop detection filter of the present invention can both detect base frequency and eliminates EM wave, while maintaining the original structure and replacing the conventional direct trans-reception with filter modules. A major characteristic of filter module is that, in addition to trans-receiving RF signals correctly, the discharge is handled by the filter. With the advance of the semiconductor technology, the threshold voltage (Vs) of the wave envelop detection filter drops from 0.6 V to 0.3 V. In other words, signals higher than 0.3V -0.6V will be filtered out. But the trans-received signals must go through the detection so that the trans-reception will be low in noise and the EM wave eliminated. With this, the use of cellular phone will no longer interfere the surrounding electronic devices or equipments, such as in a flight craft or in the hospital (prohibited by law). It is notice-worthy that the cellular phones unequipped with wave envelop detection filters are prone to damage when they are too close to the base station. It is because the continuous feedback of the noise, including the EM wave, will burn out the circuit. Therefore, the present invention is good for improving the base station, and recovering the EM wave-free space.

### SUMMARY OF THE INVENTION

As the EM wave is hazardous to the human tissues, the use of a wave envelop detection filter is important in protecting human body from the hazardous EM wave, while maintaining the normal communication of wireless devices, such as cellular phones. The present invention employs negative phase detection to avoid the positive current feeding into the filter so that it eliminates the EM wave.

Conventional techniques to eliminate EM wave are based on either isolation, or guided-discharge, depending on the source of EM wave. For external sources, the isolation approaches are usually used. For internal sources, the guided-discharge approaches are used. Since the present invention can be used for both cellular phones and base stations, it uses the latter technique. In other words, although the EM wave radiates, its drift path is uni-directional, i.e., discharging only from high voltage to low voltage. It does not need a reactant to form a circuit loop, as a magnet does. The present invention of a filter module can be used on circuit boards to filter out internal EM wave sources.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Figure 1 shows a block diagram of a filter module.

Figure 2 shows a conventional embodiment of a structure of a wave envelop detector for wired and wireless platforms.

Figure 3 shows an embodiment of the present invention of a structure of a wave envelop detector for wired and wireless platforms.

Figure 4 shows an embodiment of a detection filter module of the present invention.

### DETAILED DESCRIPTION OF THE INVENTION

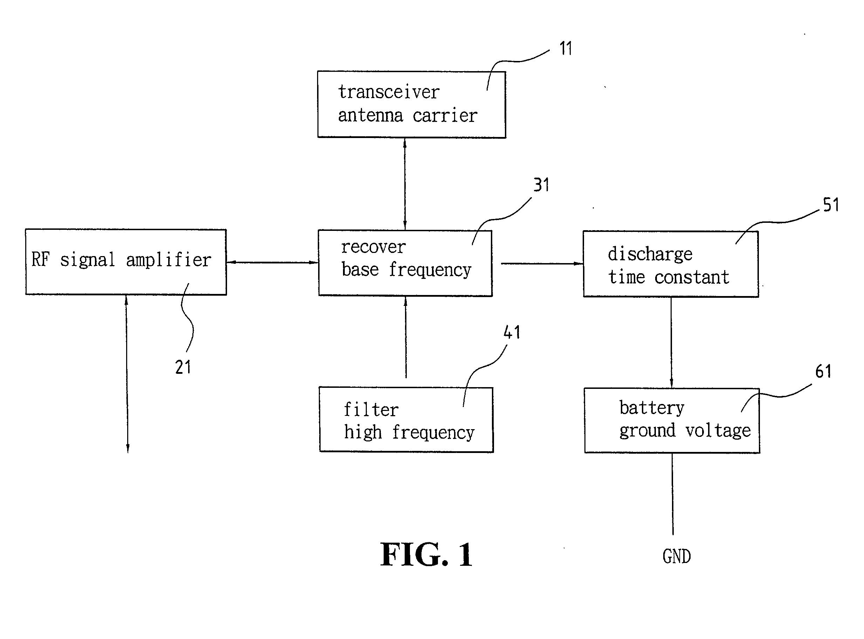

Figure 1 shows a block diagram of a filter module. Block 11 shows the transceiver antenna carrier. The transmission and the reception of signals of wireless communication devices are both carried out by the antenna. The carrier can cause the antenna to induce electrical current. The energy of the carrier determines the sensitivity of the signals. When signals are transmitted by the carrier of frequency 900MHz/1800 MHz, the carrier includes signals and other non-signal noises. Both signals and non-signals noises are transmitted by the antenna. These non-signal noises have longer wavelength, hence do not travel far.

Block 21 shows the RF signal amplifier, which is not exactly a part of a filter module, but is an mandatory part of any wireless device. It amplifies the induced electrical current from the antenna, and also the signals before sending to antenna for transmission. It is a part of the EM wave source. The present invention aims to eliminate the EM wave from this source.

Block 31 shows the recover base frequency function, which, recovers the base frequency of the real signals. The filter performs the recovery operation. After eliminating the EM wave, the output from this stage is the real signal carrier.

Block 41 shows filter high frequency detector. A high pass filter can filter out direct current so that it will not become noise and get in the amplifier. After a time constant, it will discharge completely. High frequency detection employs the negative phase detection. According to transformer operational theory, when the energy ends its transmission, a reverse direction wave with equal energy is generated. Once it gets into the amplifier, it becomes an EM wave source, with polarity. For negative phase detection, this annihilates the low frequency portion. The present semiconductor technology achieves in lowering the threshold voltage to 0.3-0.6V, and should be improved in the future.

Block 51 shows the discharge time constant. The discharge time constant is related to the wave envelop modulation. The post-detection signal does not change as rapidly as the carrier. The modulation controls the discharge time constant to detect highest base frequency. Related external conditions include a high enough input voltage so that the envelop voltage is higher than the threshold to avoid distortion. However, if the discharge time constant is too high, the base frequency will be distorted. Therefore, the time discharge time constant is very important for a filter.

Block 61 shows the battery ground voltage. The RF signal is not related to grounding, but is related to the induced current. As the EM wave is polar, its ground voltage is the battery ground voltage. Therefore, wave envelop detection filter is best for eliminating the EM wave.

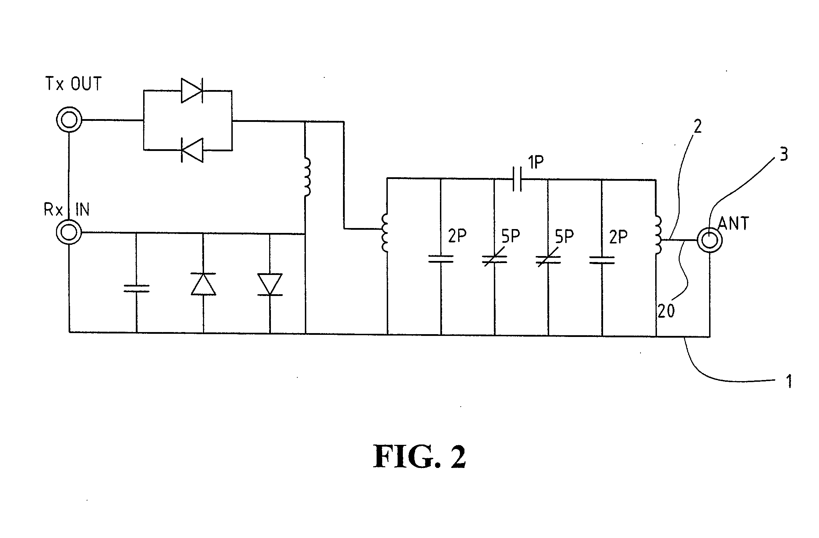

Figure 2 shows the conventional embodiment of a filter structure for wired and wireless platforms. The signal is measured relative to battery ground voltage 1. The signal travels from the output 2, along the path 20, and reaches the antenna 3.

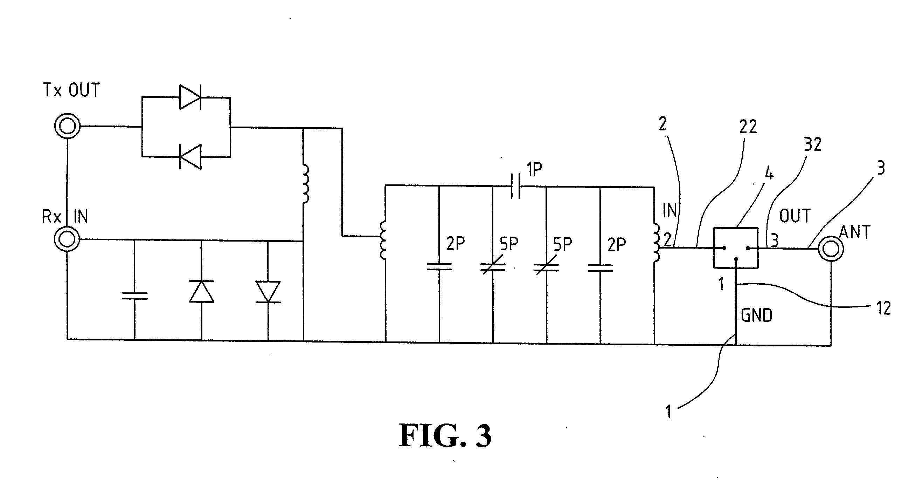

Figure 3 shows the embodiment of the present invention. By inserting a module on the path 20 between output 2 and antenna 3 in conventional embodiment (figure 2), a three-connector joint is formed: a ground voltage connector 12, output connector 22, antenna connector 32. A filter module 4 is placed to connect the three connectors. The signal travels from output 1, along path 20 into filter 4, and reaching antenna 3. Hence, the quality of the signal transmitted by the wired or wireless platforms is improved.

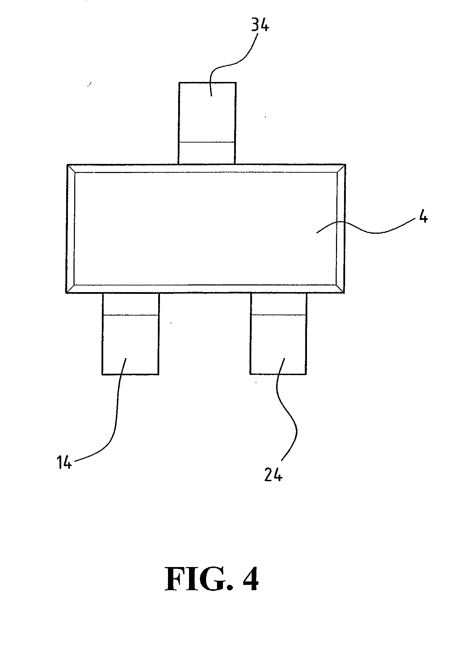

Figure 3 and figure 4 show an embodiment of the present invention of a structure of a filter for wired and wireless platform, comprising: an antenna 3, a signal (not shown), and an output 22, wherein the traveling of signal (not shown) and its related structure is shown in figure 4, which is further comprising: a filter module 4; a first connector 14, connecting the battery ground voltage 1 and the filter module 4; a second connector 24, connecting output 22 and the filter module 4; and a third connector 34, connecting antenna and filter module 4. All the connections are electrically conductive. By detection and filtering of the filter module 4, the EM wave is eliminated, and the signal at output 32 is improved.

Figure 4 shows an embodiment of the present invention of a filter module to be used in the structure designed for wired and wireless platforms. All the connectors 14, 24, and 34 are electrically conductive.

The present invention can both detect and filter waves. It detects the base frequency, and eliminates the interfering EM wave. Its advantage lies in correctly trans-receiving signals, while filtering the EM wave. Hence, the use of cellular phones will no longer interfere the surrounding electronic equipments. Therefore, the first goal of the present invention is to perform guided-discharge of the internal EM wave source within a system.

The second goal of the present invention is to find an alternative path for discharging in order to avoid the internal discharge being amplified and becoming an interfere source.

The third of the present invention is to detect the real signal, and filter out the non-signal noises.

While we have shown and described the embodiment in accordance with the present invention, it should be clear to those skilled in the art that further embodiments may be made without departing from the scope of the present invention.

## Claims

1. A structure of a wave detector for wired and wireless platforms, comprising:
an antenna;
a transmission signal;
a signal output;
a wave detection module; and
a plurality of connectors

2. A structure of a wave detector claimed as in claim 1, wherein said transmission signal travels from said signal output to said antenna.

3. A structure of a wave detector claimed as in claim 1, wherein said wave detection module further comprises an integrated circuit and at least 3 connectors.

4. A structure of a wave detector claimed as in claim 1, wherein said plurality of connectors include:
a first connector, with two ends which electrically connects battery ground voltage and corresponding connectors on said wave detection module;
a second connector, with two ends which electrically connects said signal output and corresponding connector on said wave detection module; and
a third connector, with two ends which electrically connects said antenna and the corresponding connectors on said wave detection module.
